# EUROPEAN PATENT SPECIFICATION

(11) **EP 3 051 748 B1**
(45) Date of publication and mention of the grant of the patent: **31.07.2019**
(21) Application number: 15153058.1
(22) Date of filing: 29.01.2015
(51) Int. Cl.: H04L 12/14, H04W 48/18, H04M 15/00, H04L 12/24

(54) **ONLINE CHARGING IN HYBRID ACCESS NETWORKS**
ONLINE-LADEN IN HYBRIDEN ZUGANGSNETZEN
FACTURATION EN LIGNE DANS DES RÉSEAUX D'ACCÈS HYBRIDE

(43) Date of publication of application: 03.08.2016
(73) Proprietor: Deutsche Telekom AG, 53113 Bonn (DE)
(72) Inventor: Heidemann, Cornelius, 64372 Ober-Ramstadt (DE); Vöhringer, Gerrit, 53229 Bonn (DE); Ludwig, Christoph, 53819 Neunkirchen-Seelscheid (DE)
(74) Representative: Braun-Dullaeus Pannen Emmerling Patent- und Rechtsanwaltspartnerschaft mbB

(56) References cited:
- EP-A1- 2 590 358
- US-A1- 2014 355 536

## Description

The invention relates to a method and a system for enabling charging of packet switched data transfer between an authorised customer and a network, especially the internet or an intranet, whereby the total data volume is transferred via at least two different data paths between a customer premise equipment (CPE) and a hybrid access aggregation point (HAAP) which constitutes an access to the network whereby each of both data paths uses a different access technologies for transferring its part of the data volume. For example the one data path uses a DSL telephone network and the other data path a LTE mobile network.

In conventional networks, online charging is generally a well known technology to rate the used volume in a period for Internet/intranet access. An authorised customer uses his access to connect to the Internet/Intranet and sends IP data packets (data) to servers in the internet/ intranet or receives IP data packets from servers in the internet/ intranet. In case of a flat-rate tariff each amount of the transmitted data is counted and subtracted from a fixed amount defined for a certain period. If the fixed amount of data is consumed by the customer an action occurs which is especially a reduction of transfer speed. By this technology it is possible to implement a fair use policy tariff options in mobile networks.

The mentioned technology is called "online charging" and is done by known "online charging Systems" (OCS). For mobile platforms the charging mechanism is standardised in ETSI TS 132 296. Unfortunately this mechanism for online charging is only available for networks which use a single physical access technology.

Besides, Hybrid Access Networks (HYAs) are known which combine two or more different access technologies (e.g. LTE and DSL) in an intelligent way. Hybrid Access Networks as disclosed for example in US 2014/0355536 A1 bond together the at least two physical access to one single
logical access with the goal to bring more bandwidth to the residential customer with the same behaviour of one IP access (bonded bandwidth). A HYA mechanism may need to have the capability in flexibly deciding the paths to forward data traffics.

It is the object of the invention to provide a comfortable online charging method and system which are easy to realise and to implement into existing technologies.

These objects are solved by the method with the characterising features of claim 1 and the system with the characterising features of claim 8. Preferred examples of the invention are mentioned in the dependant claims.

The major idea of the invention is to generate the total data volume as a sum of the at least both parts of data volume - these are the fractions of the total data volume which are transferred in a single path - transferred in both path and use this total data volume for charging purpose at one central point which is defined by the Online Charging System (OCS).

One major advantage of the inventive solution is that it is prepared to make use of proven mechanisms which are enhanced in a way, to allow charging a combined tunnel technology like the mentioned hybrid access. In other words, the inventive idea is to build one common tunnel over at least two different access technologies parallel, which are necessary for hybrid access.

The passed parts of data volume are separately determined in each single path by a respective counter unit. After determination information about the respective part of data volume is transferred to a central charging unit, especially the online charging system (OCS), which is related to the Customer Premise Equipment (CPE). In that embodiment the central charging unit is that device which generates the sum of all single parts of data volume. The advantage of this arrangement is that the counter units still exist in each access technology and therefore can be used.

In a further embodiment the central charging unit is periodically provided with a fixed maximum volume of data per defined time period whereby the fixed maximum volume builds a threshold. While the central charging unit adds the single parts of data volume it compares the resulting sum with this threshold. When the sum reaches - or in extreme passes - the threshold, the central charging unit induces an adverse effect regarding the access facility of the customer. Especially it induces a reduction of the transfer rate. For example this may happen when the customer has passed his internet flat rate.

In a very advantageous embodiment, the complete fixed maximum volume or flat rate is split into a number of small volume blocks whereby the central charging unit provides the single counter units with a sequence of these volume blocks as long as the sum of all volume blocks do not exceed the threshold defined by the fixed maximum volume. In a preferred embodiment the mechanism creates different block sizes whereby a decision mechanism calculates the next block size before assigning it to one of both service creations for hybrid access technologies.

Realising this mechanism the central charging unit may create a volume block of defined size containing an amount of data for each of both paths. Then it assigns the volume blocks to the respective the counter units which for example may be realised by a fixed or mobile network gateway (BNG, GGSN). Each volume block builds a "partly" maximum volume (a separate threshold) for the respective counter unit. Provided with such a volume block the counter unit controls the part of data volume transported in the respective path. If this part of data volume exceeds the partly maximum volume defined by the volume block the counter unit obtains a new volume block by the central charging unit as long as the sum of all volume blocks does not exceed the threshold defined by the fixed maximum volume.

Preferably the central charging unit defines the size of the single volume blocks in relation to the remaining total volume and/or the current conditions for data transfer in the respective path.

With this inventive mechanism both physical accesses can be used independent from each other. Therefore online charging has to keep the behaviour of the underlying access in mind, that both access have to counted, independent from their state of usage and in such a way, that the user has the chance to use his paid volume and also in a way, that not to much volume is available for the user, in worst case the double of amount.

When such an online charging would be designed in a simple way, such a solution would assign the full volume twice, one volume for every access, so that in every situation (failure, use only one access) enough volume is available.

The technical realisation may be done by enhancing the OCS and the mechanism for multi SIM online charging. A new connection to the fixed platform may be built, which allows the OCS System to assign blocks and get status messages back from the service creation of the usages behaviour.

To implement the inventive "intelligent online charging system for hybrid access" (fair use policy hybrid access) for an hybrid access technology it is advantageous to design a OCS solution, which is able to handle one volume over both access platforms in a way, that the volume is nearly exacted counted, independent which access technology is used.

This may be done by calculating volume blocks as a defined part of the periodic fixed maximum volume and assign two blocks at the beginning of the period to the service creations (BNG and GGSN) of both access technologies. A service creation may be used as a network element, which can identify the customer and account the used volume. The block size is calculated, dependent of the maximum available bandwidth (e.g. narrowband access with low bandwidth and therefore small throughput) of both access technologies. If the block is consumed a new block is assigned to one or both access. The new blocks may be calculated dependent on how fast the volume was consumed and also dependent on the above described mechanism. Further it may be considered how much volume is left and how much volume was assigned to the second service creation.

The invention will be described in more detail by reference to the following figures:
- **Figure 1**: a network topology with service creation points for counting and data flows for hybrid access and
- **Figure 2**: a mechanism with intelligent block assignment.

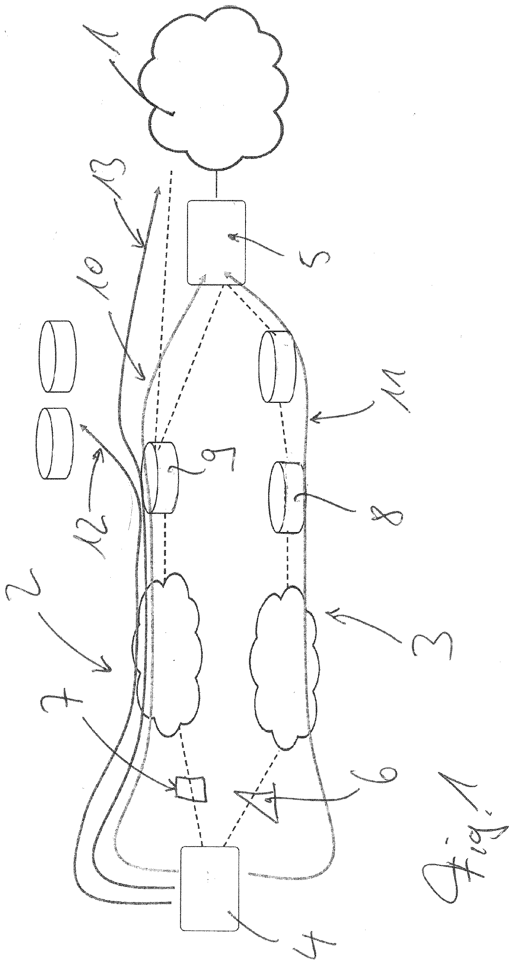

Figure 1 discloses a typical network for hybrid access to the internet 1 or an intranet over two access networks, which in this case are a fixed DSL network 2 and a mobile LTE network 3. In the figure the physical network paths are symbolised by dashed lines and the (virtual) data paths by continuous lines. An authorised customer has hybrid access via his Customer Premise Equipment 4 (CPE) whereby a CPE connects multiple hosts to provide connectivity to service providers network. For access to the LTE network the CPE connects to an eNodeB 6 whereby the connection to the DSL network 2 uses a router 7.

The CPE 4 can flexibly decide which packets of the data volume should be forwarded through the LTE access network 3 when the DSL network 2 is heavily loaded. Each packet is associated to a single forwarding path while different packets belonging to the same flow could be transferred by different paths. Therefore, compared to flow-based solutions, the CPE in a packet-based solution can tune the bandwidth consumption on different paths in a flexible and fine-grained way.

The data transfer happens via the different paths between the CPE and a hybrid access aggregation point (HAAP) 5 which constitutes an access to the Internet 1. The HAAP acts as a service termination and a service creation implements bonding mechanism and sets up a high speed Internet dual stack IP connection with CPE on top of two or more hybrid access technologies. The packet reorder, reassemble functions in packet-based solutions should be supported on HAAP.

Both networks 2 and 3 include its own single counter unit a defined in the respective standard documentation. In case of the LTE network 3 the counter unit is a GGSN 8 (gateway GPRS support node) and in case of the DSL network a BNG 9 (broadband network gateway). The data paths of the DSL network is symbolised by a tunnel fixed line 10 and the path of the LTE network is symbolised by a tunnel mobile 11. Besides there is a separate path 12 for voice and entertainment and one other 13 for customer wishes.

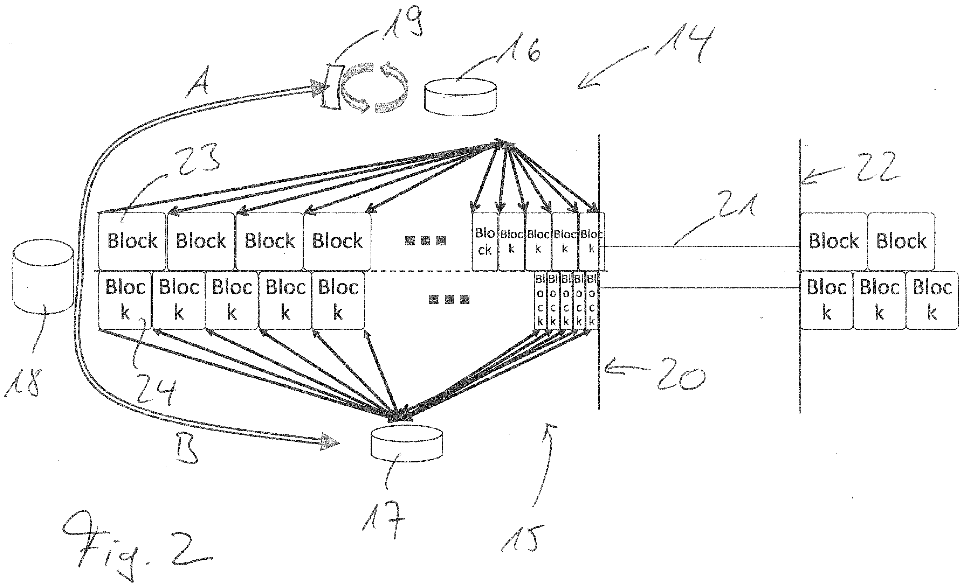

In Figure 2 the mechanism with intelligent block assignment is shown. The figure is divided into the two paths, the DSL path 14 and the LTE path 15, whereby the DSL path 14 includes a BNG 16 and the LTE path a GGSN 17. A common central charging unit in form of an online charging system (OCS) 18 define and provides (arrows A and B) data blocks to both, the BNG 16 and the GGSN 17 whereby the BNG 16 is connected via the telephone network (FN) 19.

The figure 2 illustrates the inventive mechanism of assigning single data blocks over a specific time period whereby the OCS is provided with a fixed maximum volume of data (flat rate) per defined time period. The end of the time period is reached at the moment symbolised by line 20. At that point the customer has consumed his complete fixed maximum volume defined by his flat rate. In the subsequent phase 21 the date transfer speed is reduced up to the point 22 when the next fixed amount is available.

At the beginning OCS assigns two first blocks 23 and 24 to the service creations BNG and GGSN of both access technologies. Since the DSL has network has currently the better performance the assigned block 23 is larger than the block 24 for LTE. It is because the block size is calculated dependent of the maximum available bandwidth of both access technologies. If the particular block is consumed a new block is assigned to one or both access. This is done as long as the sum of all blocks added and assigned by the OCS is below the limit at line 20 which symbolises the achievement of the defined maximum capacity of data volume as given by the flat rate. The scope of the invention is defined by the appended claims.

### References

Figure 1
   - 1: network
   - 2: first path (fixed DSL network)
   - 3: second path (mobile LTE network)
   - 4: Customer Premise Equipment (CPE)
   - 5: Hybrid Access Aggregation point (HAAP)
   - 6: eNodeB
   - 7: router
   - 8: gateway GPRS support node (GGSN)
   - 9: broadband network gateway (BNG)
   - 10: tunnel fixed line
   - 11: tunnel mobile line
   - 12: separate path for voice and entertainment
   - 13: path for customer wishes
Figure 2
   - 14: DSL path
   - 15: LTE path 15
   - 16: BNG
   - 17: GGSN
   - 18: central charging unit (OCS)
   - 19: telephone network
   - 20: border line
   - 21: subsequent phase
   - 22: point
   - 23: one first block
   - 24: an other first block

## Claims

1. Method for enabling charging of packet switched data transfer between an authorised customer and a network (1) whereby the total data volume is transferred via at least two different data paths (2,3) between an equipment (4) related to the customer and a hybrid access aggregation point (5), which constitutes an access to the network (1), whereby each of both data paths (2,3) uses a different access technology for transferring its part of the total data volume,
**characterised by**
determining the total data volume as a sum of the both parts of total data volume transferred in both paths (2,3) and using this total data volume for charging purposes by a central charging unit (18),
whereby the transferred parts of total data volume are determined separately in each single path (2,3) by a respective separate counter unit. (8,9), whereby an information about the determined part of total data volume is transferred from each separate counter unit (8,9) to the central charging unit (18) which uses the information for building the total data volume as the sum of the both parts of total data volume.

2. Method according to claim 1,
**characterised in that**
the central charging unit (18) is periodically provided with a fixed maximum volume of data capacity per defined time period whereby the fixed maximum volume builds a threshold and whereby the central charging unit (18) compares the sum with this threshold for initiating an action when the threshold is reached or passed.

3. Method according to claim 2,
**characterised in that**
the central charging unit (18) induces an adverse effect regarding customers access facility, especially induces a reduction of the transfer rate assigned to the customer.

4. Method according to claim 2 or claim 3,
**characterised in that**
the central charging unit (18) splits the complete fixed maximum volume into a number of small volume blocks (23,24) and assigns them in sequence to the counter units (16,17) as long as the sum of all assigned volume blocks (23,24) do not exceed the threshold.

5. Method according to claim 4,
**characterised in that**
each counter (16,17) unit controls, whether the data transported in its related path exceeds the limit of the assigned volume block whereby a new volume block is assigned to the counter unit when the limit is reached or passed.

6. Method according to claim 4 or claim 5,
**characterised in that**
the central charging unit (18) creates different block sizes whereby a decision mechanism calculates the next block size before assigning it to one of both counter units.

7. Method according to claim 6,
**characterised in that**
the block size is calculated in relation to the momentary available maximum bandwidth of the single access technology.

8. System for enabling charging of packet switched data transfer between an authorised customer and a network (1) comprising an equipment related to the customer (4), a hybrid access aggregation point (5) which constitutes an access to the network (1) and at least two different data paths (2,3) between the equipment related to the customer (4) and the hybrid access aggregation point (5) to transfer parts of a total data volume whereby each of both data paths (2,3) uses a different access technology for data transfer, **characterised by**
means (18) for determining the total data volume as a sum of the parts of total data volume transferred via both paths (2,3),
a central charging unit (18) using this total volume for charging purposes and
a separate counter unit (8,9,16,17) in each single path (2,3) for determining the part of total data volume transferred in the related paths and for informing the central charging unit about the determined part of total data volume.

9. System according to claim 8,
**characterised in that**
the network is the internet.

## Patentansprüche

1. Verfahren zum Ermöglichen einer Abrechnung von paketvermittelter Datenübertragung zwischen einem autorisierten Kunden und einem Netzwerk (1), wobei das Gesamtdatenvolumen über mindestens zwei unterschiedliche Datenwege (2, 3) zwischen einem dem Kunden zugeordneten Gerät (4) und einem hybriden Zugangsaggregationspunkt (5), der einen Zugang zu dem Netzwerk (1) konstituiert, übertragen wird, wobei jeder der beiden Datenwege (2, 3) eine unterschiedliche Zugangstechnologie zum Übertragen seines Teils des Gesamtdatenvolumens verwendet,
**gekennzeichnet durch**
Bestimmen des Gesamtdatenvolumens als eine Summe der beiden Teile des Gesamtdatenvolumens, das auf beiden Wegen (2, 3) übertragen wird, und Verwenden dieses Gesamtdatenvolumens für Abrechnungszwecke durch eine zentrale Abrechnungseinheit (18),
wobei die übertragenen Teile des Gesamtdatenvolumens separat in jedem einzelnen Pfad (2, 3) von einer jeweiligen separaten Zählereinheit (8, 9) bestimmt werden, wobei eine Information über den bestimmten Teil des Gesamtdatenvolumens von jeder separaten Zählereinheit (8, 9) zu der zentralen Abrechnungseinheit (18) übertragen wird, die die Informationen verwendet, um das Gesamtdatenvolumen als die Summe der beiden Teile des Gesamtdatenvolumens zu bilden.

2. Verfahren nach Anspruch 1,
**dadurch gekennzeichnet, dass**
der zentralen Abrechnungseinheit (18) periodisch ein festes maximales Volumen an Datenkapazität pro definiertem Zeitraum bereitgestellt wird, wobei das feste maximale Volumen einen Schwellenwert bildet und wobei die zentrale Abrechnungseinheit (18) die Summe mit diesem Schwellenwert vergleicht, um eine Aktion zu initiieren, wenn der Schwellenwert erreicht oder überschritten wird.

3. Verfahren nach Anspruch 2,
**dadurch gekennzeichnet, dass**
die zentrale Ladeeinheit (18) einen nachteiligen Effekt in Bezug auf Zugangsmöglichkeit des Kunden induziert, insbesondere eine Reduzierung der dem Kunden zugewiesenen Übertragungsrate induziert.

4. Verfahren nach Anspruch 2 oder Anspruch 3,
**dadurch gekennzeichnet, dass**
die zentrale Abrechnungseinheit (18) das vollständige feste maximale Volumen in eine Anzahl kleiner Volumenblöcke (23, 24) aufteilt und sie in Sequenz den Zählereinheiten (16, 17) zuweist, solange die Summe aller zugewiesenen Volumenblöcke (23, 24) den Schwellenwert nicht überschreitet.

5. Verfahren nach Anspruch 4,
**dadurch gekennzeichnet, dass**
jede Zählereinheit (16, 17) steuert, ob die Daten, die in ihrem zugehörigen Pfad transportiert werden, den Grenzwert des zugewiesenen Volumenblocks überschreiten, wobei der Zählereinheit ein neuer Volumenblock zugewiesen wird, wenn der Grenzwert erreicht oder überschritten wird.

6. Verfahren nach Anspruch 4 oder Anspruch 5,
**dadurch gekennzeichnet, dass**
die zentrale Abrechnungseinheit (18) unterschiedliche Blockgrößen erzeugt, wobei ein Entscheidungsmechanismus die nächste Blockgröße berechnet bevor sie einer von beiden Zählereinheiten zugewiesen wird.

7. Verfahren nach Anspruch 6,
**dadurch gekennzeichnet, dass**
die Blockgröße in Bezug auf die momentan verfügbare maximale Bandbreite der Einzelzugangstechnologie berechnet wird.

8. System zum Ermöglichen von Abrechnenungen von paketvermitteltem Datentransfer zwischen einem autorisierten Kunden und einem Netzwerk (1), umfassend
ein Gerät in Bezug auf den Kunden (4), einen hybriden Zugangsaggregationspunkt (5), der einen Zugang zu dem Netzwerk (1) konstituiert, und
mindestens zwei unterschiedliche Datenwege (2, 3) zwischen dem Gerät in Bezug auf den Kunden (4) und dem hybriden Zugangsaggregationspunkt (5), um Teile eines Gesamtdatenvolumens zu übertragen, wobei jeder der beiden Datenwege (2, 3) eine unterschiedliche Zugangstechnologie für Datenübertragung verwendet,
**gekennzeichnet durch**
Mittel (18) zum Bestimmen des Gesamtdatenvolumens als eine Summe der Teile des Gesamtdatenvolumens, das über beide Wege (2, 3) übertragen wird,
eine zentrale Abrechnungseinheit (18), die dieses Gesamtvolumen zu Abrechnungszwecken verwendet, und
eine separate Zählereinheit (8, 9, 16, 17) in jedem einzelnen Weg (2, 3) zum Bestimmen des Teils des Gesamtdatenvolumens, das in den zugehörigen Wegen übertragen wird und zum Informieren der zentralen Abrechnungseinheit über den bestimmten Teil des Gesamtdatenvolumens.

9. System nach Anspruch 8,
**dadurch gekennzeichnet, dass**
das Netzwerk das Internet ist.

## Revendications

1. Procédé pour permettre une facturation d'un transfert de données commutées par paquets entre un client autorisé et un réseau (1), moyennant quoi le volume de données total est transféré via au moins deux trajets de données différents (2, 3) entre un équipement (4) relatif au client et un point d'agrégation d'accès hybride (5), qui constitue un accès au réseau (1), moyennant quoi chacun des deux trajets de données (2, 3) utilise une technologie d'accès différente pour transférer sa partie du volume de données total,
**caractérisé par**
la détermination du volume de données total comme une somme des deux parties du volume de données total transféré dans les deux trajets (2, 3) et l'utilisation de ce volume de données total à des fins de facturation par une unité de facturation centrale (18),
moyennant quoi les parties transférées du volume de données total sont déterminées séparément dans chaque trajet unique (2, 3) par une unité de compteur séparée respective (8, 9), moyennant quoi une information relative à la partie déterminée du volume de données total est transférée à partir de chaque unité de compteur séparée (8, 9) vers l'unité de facturation centrale (18) qui utilise information pour construire le volume de données total comme la somme des deux parties du volume de données total.

2. Procédé selon la revendication 1, **caractérisé en ce que** l'unité de facturation centrale (18) est pourvu périodiquement d'une capacité de volume de données maximal fixe par période de temps définie moyennant quoi le volume maximal fixe construit un seuil et moyennant quoi l'unité de facturation centrale (18) comprend la somme avec ce seuil pour amorcer une action lorsque le seuil est atteint ou dépassé.

3. Procédé selon la revendication 2, **caractérisé en ce que** l'unité de facturation centrale (18) induit un effet inverse concernant l'installation d'accès des clients, notamment induit une réduction du taux de transfert assigné au client.

4. Procédé selon la revendication 2 ou 3, **caractérisé en ce que** l'unité de facturation centrale (18) divise le volume maximal fixe complet en un nombre de petits blocs de volume (23, 24) et les assigne en séquence aux unités de compteur (16, 17) tant que la somme de tous les blocs de volume assignés (23, 24) n'excède pas le seuil.

5. Procédé selon la revendication 4, **caractérisé en ce que** chaque unité de compteur (16, 17) commande si les données transportées dans son trajet relatif excèdent la limite du bloc de volume assigné moyennant quoi un nouveau bloc de volume est assigné à l'unité de compteur lorsque la limite est atteinte ou dépassée.

6. Procédé selon la revendication 4 ou 5, **caractérisé en ce que** l'unité de facturation centrale (18) crée des tailles de blocs différentes moyennant quoi un mécanisme de décision calcule la taille de bloc suivante avant de l'assigner à une des deux unités de compteur.

7. Procédé selon la revendication 6, **caractérise en ce que** la taille de bloc est calculée relativement à la bande passante maximale disponible momentanée de la technologie d'accès unique.

8. Système pour permettre une facturation d'un transfert de données commutées par paquets entre un client autorisé et un réseau (1) comprenant
un équipement relatif au client (4), un point d'agrégation d'accès hybride (5) qui constitue un accès au réseau (1) et
au moins deux trajets de données différents (2, 3) entre l'équipement relatif au client (4) et le point d'agrégation d'accès hybride (5) pour transférer des parties d'un volume de données total moyennant quoi chacun des deux trajets de données (2, 3) utilise une technologie d'accès différente pour le transfert de données,
**caractérisé par**
un moyen (18) pour déterminer le volume de données total comme une somme des parties du volume de données total transféré via les deux trajets (2, 3),
une unité de facturation centrale (18) utilisant ce volume total à des fins de facturation et
une unité de compteur séparé (8, 9, 16, 17) dans chaque trajet unique (2, 3) pour déterminer la partie du volume de données total transférée dans les trajets relatifs et pour informer l'unité de facturation centrale au sujet de la partie déterminée du volume de données total.

9. Système selon la revendication 8, **caractérisé en ce que** le réseau est l'Internet.
